# EUROPEAN PATENT SPECIFICATION

(11) **EP 1 800 031 B1**
(45) Date of publication and mention of the grant of the patent: **23.04.2008**
(21) Application number: 05791738.7
(22) Date of filing: 14.10.2005
(51) Int. Cl.: F16K 7/12, F16K 23/00, B65D 25/44, B65D 47/20, B67D 3/04

(54) **IMPROVEMENTS IN DRIP FREE VALVES**
VERBESSERUNGEN VON TROPFFREIEN VENTILEN
AMELIORATIONS DE VANNES ANTIGOUTTE

(30) Priority: 14.10.2004 GB 0422721
(43) Date of publication of application: 27.06.2007
(73) Proprietor: Vallid Limited, Wickham Bishops, Essex CM8 3EA (GB)
(72) Inventor: REID, John, Nicholas, Great Wakering Essex SS3 0NA (GB)
(74) Representative: Messulam, Alec Moses
(86) International application number: PCT/GB2005/050185
(87) International publication number: WO 2006/040599

(56) References cited:
- EP-A- 1 217 284
- GB-A- 2 365 413
- US-A- 4 387 879
- US-A- 5 843 046
- US-A1- 2003 014 015

## Description

### Field of the invention

The present invention relates to a faucet incorporating a drip free valve for controlling the flow of a liquid. The term "drip-free" is used herein to denote a valve which can not only completely stem the flow of a liquid passing through it but additionally avoids any liquid adhering to its outer surface when it is closed. The faucet of the invention is especially suitable for use in dispensing a comestible product such as milk, soup or fruit juice, which would turn rancid or become infected if left exposed on the outer surface of the faucet.

### Background of the invention

It is known for a drip-free valve to comprise a resilient membrane formed with one of more slits defined by petals that are resiliently deformable between a first position in which the slits are closed and the petals lie in the plane of the membrane and a second position in which the slits are open and the petals are deformed out of the plane of the membrane.

Drip free valves as described above are well known and will be referred to herein as sphincter valves. An example of such a valve is disclosed in DE-OS-26098310. Hitherto, such valves, which have been used for example in shampoo and shower gel bottles, have comprised a dished membrane with cruciform slits, the membrane being convex towards the interior of the bottle. The valve is self-closing and drip free in that the weight of liquid in the bottle in attempting to flatten the membrane from its dished configuration into a flat plane will apply a force tending to close the slits and prevent the egress of the liquid. When liquid is to be dispensed, the pressure is increased, such as by squeezing the bottle, to such a level that the membrane is inverted into a convex outwards configuration. The pressure on the petals now acts to separate them, so as to open out the slits and allow the liquid to escape.

### Object of the invention

The present invention seeks to provide a faucet which is based on a modification of this type of valve.

### Summary of the invention

According to the present invention, there is provided a faucet comprising a body, a membrane mounted on the lower end of the body and formed with at least one slit defined by petals, and a plunger arranged within the body, wherein the plunger and the body are movable axially relative to one another between a closed position in which the plunger is spaced from the membrane and the membrane adopts an upwardly convex dished configuration and an open position in which the plunger contacts and deflects the membrane into a downwardly convex configuration.

EP 1217284 discloses a two-part connector for medical instruments in which a sphincter valve is arranged in one of the two parts to prevent leakage then the two parts are separated. The second part of the connector passes through the valve to open it when the two parts are coupled to one another. Such a connector, however, has no application as a faucet.

In prior art proposals relating to the dispensing of liquids in which a dished membrane with slits is used as a closure member, the membrane is normally inverted by the pressure of the liquid bearing against it. Small increases in pressure insufficient to cause inversion of the membrane will not result in any liquid being dispensed. However, as soon as a threshold is reached to cause inversion, the valve opens suddenly and the liquid comes out forcefully. The opening of the valve however brings about a drop in pressure and when the user ceases to apply further pressure by squeezing the bottle the membrane snaps back into its natural sealed position. There is thus a non-linear and somewhat unpredictable relationship between the pressure and the liquid flow.

This problem is overcome in the present invention because the petals defining the slit (s) in the membrane are not opened by the liquid pressure but instead they are mechanically deformed by direct contact with an abutment member. The valve may therefore be opened while the liquid pressure is still low and in this way spurting of the liquid is avoided.

In a preferred embodiment of the invention, the lower end of the plunger is formed as a tube through which fluid flows when the faucet is open. In this case, once the faucet has been opened, the amount of liquid dispensed through it can be metered and its rate of flow can be set at whatever level is desired by varying the pressure of the liquid. In other words, by divorcing the opening of the valve from the pressure of the liquid, the invention allows the pressure to be varied at will to set the desired rate of flow and to meter the precise quantity of the liquid that is required.

Thus, unlike sphincter valves disclosed in the prior art, the faucet of the invention can be used in conjunction with a container which cannot be pressurised to the point where the valve is forced open. For example, the valve can be used with so-called "bag-in-a-box" containers of the type used to package wine. Such packages are used to dispense wine not by being squeezed but by operating a faucet. The faucet needs to be drip-free because any spillage can result in staining of furniture and carpets.

Because the valve of the invention is not pressure operated, it avoids the disadvantage of the liquid tending to spurt out, which in prior art valves makes it difficult to meter out liquid with precision and risks the liquid splashing the user.

Conventionally, the resilient membranes of sphincter valves are made of silicone rubber and their convex shape in the closed position of the valve is achieved by moulding. Moulding of the membranes individually is however time consuming, and this adds considerably to the cost of manufacture of the valves. It has been proposed, in CA 2478226 to provide the membrane with a retaining ring that surrounds its periphery, the retaining ring being formed by insert moulding.

In a preferred embodiment of the invention, the membrane is formed of a flat disc of a resilient material that is rendered convex by virtue of its rim being trapped and squeezed between two opposed conical surfaces of a two-part mounting ring that surrounds the membrane.

The latter embodiment of the invention offers the advantage that as the membrane is a flat disc, it need not be moulded individually but can be cut out of a flat sheet. The clamping the rim of the disc between two conical surfaces distorts the flat disc into a convex shape and the squeezing of the thickness of the disc between the two conical surfaces displaces the resilient material towards the centre of the disc to apply a force to keep the slit or slits closed.

### Brief description of the drawings

The invention will now be described further, by way of example, with reference to the accompanying drawings, in which:
Figure 1 is a section through a valve of the invention in its closed position,
Figure 2 is an end view of the valve in its closed position,
Figure 3 is a section similar to that of Figure 1 showing the valve in its open position,
Figure 4 is a section through a manually operable faucet (often also referred to as a tap) for a bag in a box container using a valve of the invention, the faucet being shown in its closed position,
Figure 5 is a similar section to that of Figure 4 showing the same faucet in its open position, and
Figures 6 and 7 show alternative shapes of the tube used to open the slits of the sealing membrane.

### Detailed description of the preferred embodiment (s)

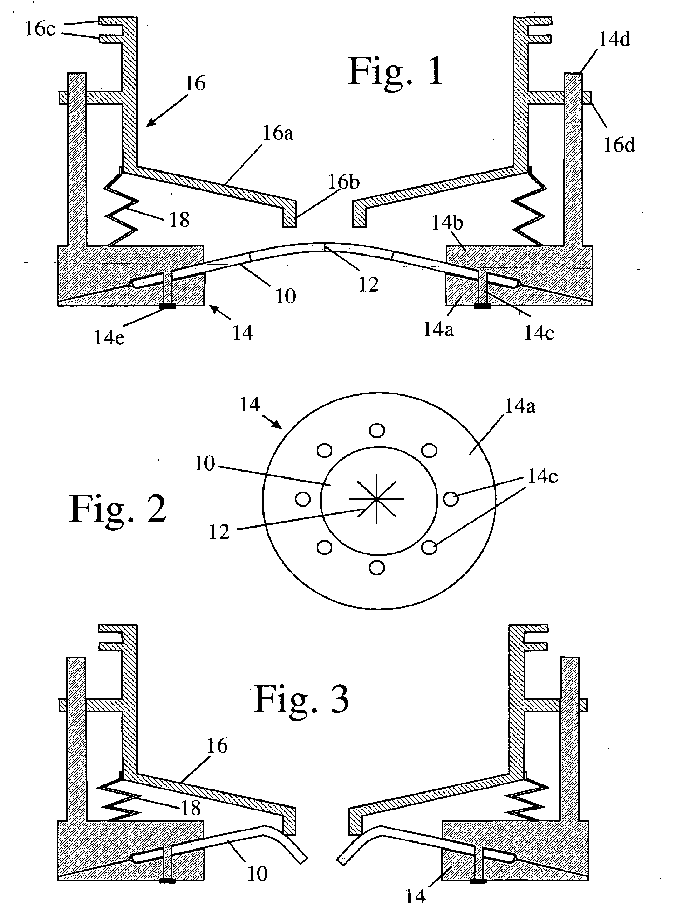

The valve in Figures 1 to 3 of the drawings is intended to be fitted to a container containing a liquid to be dispensed. The valve comprises a rigid tube 16 that is secured to a wall of the container, the tube 16 being provided with a pair of collars 16c between which a wall of the container is sandwiched and sealed. If the container is a "bag-in-a-box" then there may be three such collars for separately sealing against the bag and the box. The tube 16 has a funnel section 16a at its lower end, as viewed, which terminates in a spout 16b.

A dished resilient membrane 10 having radial slits 12 acts as the sealing membrane of the liquid filled compartment that surrounds the spout 16b. The compartment is defined by the outer surface of the tube 16, a two-part mounting ring 14 (described in greater detail below) surrounding the rim of the membrane 12, and a collapsible bellows 18 that seals against the mounting ring 14 and the tube 16.

Though four intersecting slits 12 are shown in the drawing and conventionally at least two such intersecting slits are present, it is preferred to use a single slit that is as long as the inside diameter of the mounting ring 14.

In the position of the mounting ring 14 shown in Figure 1, the membrane 10 is convex upwards and the pressure of the liquid, in the container acts to close the slits 12 in the membrane 10 to prevent the egress of any liquid from the container. In the known manner of sphincter valves, this ensures that the valve is drip free, i.e. no liquid drips from the container and no droplets of liquid adhere to any outer surface of the valve.

To open the valve, one does not increase the pressure of the liquid in the container. Instead, the mounting ring 14 and the membrane are moved towards the tube 16 until the spout 16b contacts the petals defining the slits 12 and bends then downwards as shown in Figure 3 to create an opening. This then allows liquid from the spout 16b to be dispensed through the opening. Once the dispensing operation in completed, the mounting ring 14 and the membrane 10 are again moved away from the spout 16b. The valve then closes naturally under its own resilience in the conventional manner of a sphincter valve.

Because moulding a dished elastomeric membrane requires long cycle times, and is therefore expensive, the invention employs a membrane that is cut from a flat disk and then clamped around its rim between two conical surfaces defined by two separable parts 14a and 14b of the mounting ring 14. The action of dishing the flat disk tends to separate the slits and to open the valve but it has been found that if the rim is compressed axially between the mounting ring parts and the displaced material is prevented from moving radially outwards by the shape of the mounting ring surfaces, then the axial compression is converted into a radial compression which acts to close the slits. In this way, the sealing membrane 10 can be stamped out of a flat sheet instead of being moulded, significantly reducing its manufacturing cost.

In the embodiment of Figure 1 to 3, the mounting ring 14 is formed of a thermoplastic material. The mounting ring part 14b is formed with spigots 14c that pass through holes in the membrane 10 and in the other mounting ring part 14a. After the required clamping pressure has been applied to the mounting ring parts 14a and 14b to close the slits, welds 14e are formed at the ends of the spigots 14c to prevent the parts from separating.

The mounting ring part 14b is also shown as having projecting rods 14d that engage in holes in a flange 16d projecting radially from the outer surface of the tube 16. The purpose of these rods 14d is to ensure that the mounting ring 14 does not skew during the course of its movement and the membrane remains perpendicular to the axis of the tube 16.

Other ways of guiding the movement of the membrane 10 will be readily apparent to those skilled in the art. For example, the mounting ring may be formed on the axial end of a threaded sleeve which is screwed onto the outer surface of the tube 16, an O-ring seal being used to seal between the sleeve and the tube 16 instead of the bellows 18.

The mechanism for opening and closing the valve is not shown but may for example include a mechanically or electromagnetically operated lever for raising and lowering of the mounting ring 14 in the case of the illustrated embodiment. In other embodiments, the operating mechanism may comprise means for rotating rather than axially displacing the mounting ring.

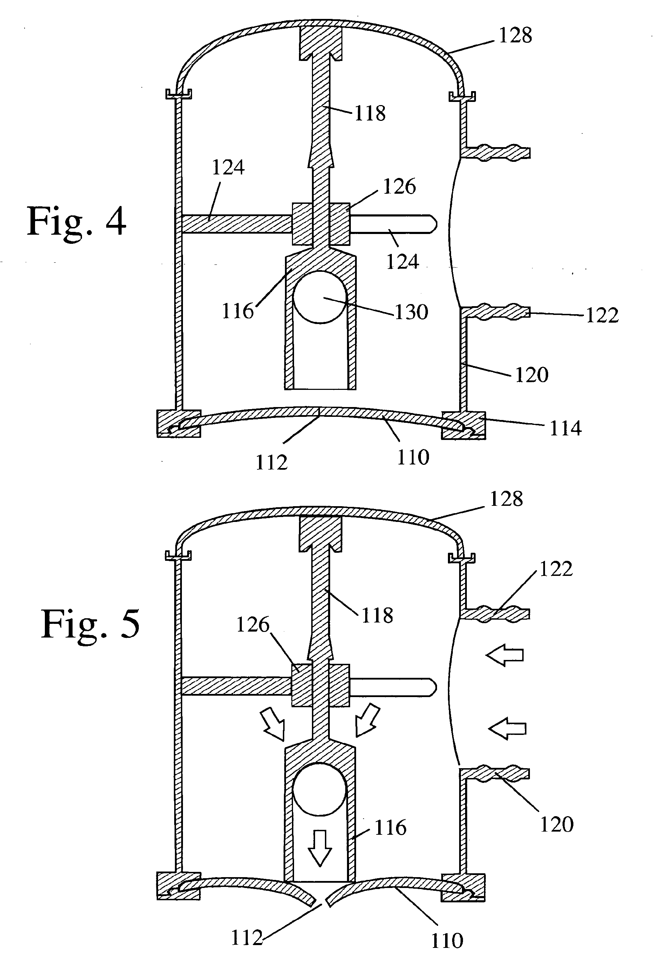

Figures 4 and 5 show a manually operable faucet for a bag-in-a-box container using a valve of the invention. The main difference between this embodiment and that of Figures 1 to 3 is that in this case the mounting ring 114 of the membrane 110 is fixed in relation to the box and it is the tube 116 that is movable by virtue of being mounted on a manually depressible plunger 118.

The faucet has a body 120 in the form of an open ended tube. A branch pipe 122 of the body 120 is sealed in relation to the liquid filled container (not shown). At its lower end, the body 120 is formed with a two part mounting ring 114 similar to the previously described mounting ring 14 and a silicone rubber membrane 110 with a single slit 112 is compressed between the two parts of the mounting ring 114.

The plunger 118 carrying the tube 116 is guided for axial movement by a bearing 126 which is itself supported in the body 120 by means of radial legs 124. At its upper end, the plunger is attached to a resilient rubber cap 128 that is sealed to the upper end of the body 120.

In the position shown in Figure 4, the cap 128 is released and raises the plunger 118 out of contact with the membrane 110 so that the faucet is closed. When the cap 128 is depressed manually into the position shown in Figure 5, it urges the plunger 118 downwards and the tube 116 contacts the membrane 110 and opens the slit 112 to allow liquid to flow out of the faucet. More particularly, the liquid filling the body 120 enters the tube 116 radially through one or more holes 130 and passes out of the faucet by flowing axially through the tube 116 and the slit 112.

If a round tube 116 is used to open the slit or slits 12 to allow liquid to flow out of the faucet, liquid will flow both within and around the tube 116 and it will come into contact with the membrane 110. This can result in uncontrolled flow and risks leaving liquid attached to the sealing edges.

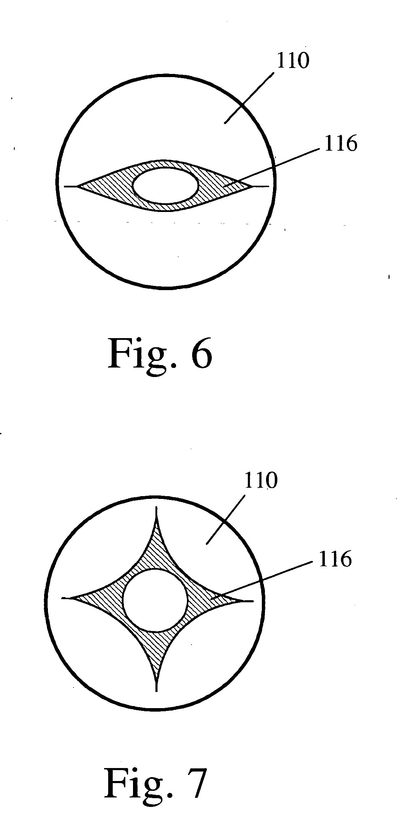

To reduce this effect, it is desirable to shape the outer surface of the tube 116 in the embodiment of Figs 4 and 5, or the spout 16b in the embodiment of Fig. 1, so that it conforms to the shape of the opening that it forms by deflecting the sealing membrane 12 or 112. Fig. 6 shows a suitable shape for outer surface of the the tube 116 in the case where the membrane 110 has a single slit and Fig. 7 shows a suitable shape of the tube 116 when the membrane has a cruciform slit. By suitably shaping the tube 116, it is possible to ensure that liquid is only discharged by flowing within the tube 116, maintaining a smooth flow and avoiding direct contact between the liquid and the sealing edges of the membrane.

Figure 6 also shows that the inner surface of the tube 116 need not have a circular cross section, the illustrated elliptical cross section allowing a larger opening through which the liquid can flow.

## Claims

1. A faucet comprising a body, a membrane (10, 110) mounted on the lower end of the body and formed with at least one slit (12, 112) defined by petals, and a plunger (16, 116) arranged within the body, wherein the plunger and the body are movable axially relative to one another between a closed position in which the plunger is spaced from the membrane and the membrane adopts an upwardly convex dished configuration and an open position in which the plunger contacts and deflects the membrane into a downwardly convex configuration.

2. A faucet as claimed in claim 1, wherein the lower end of the plunger is formed as a tube (16b) through which fluid flows when the faucet is open.

3. A faucet as claimed in claim 2, wherein the outer surface of the tube is shaped to seal against the petals of the membrane in the open position of the valve.

4. A faucet as claimed in any preceding claim, wherein the membrane is formed of a flat disc of a resilient material that is rendered convex by virtue of its rim being trapped and squeezed between two opposed conical surfaces of a two-part mounting ring (14, 114) that surrounds the membrane.

## Patentansprüche

1. Ventil mit einem Ventilkörper, einer am unteren Ende des Ventilkörpers angebrachten Membran (10, 110) mit wenigstens einem, durch blütenblattartige Abschnitte gebildeten Schlitz (12, 112), und mit einem in dem Ventilkörper angeordneten Tauchstutzen (16, 116), worin der Tauchstutzen und der Ventilkörper axial relativ zueinander bewegbar sind, zwischen einer geschlossenen Stellung, in welcher der Tauchstutzen von der Membran beabstandet ist, und die Membran eine konvex nach oben gewölbte Stellung einnimmt, und einer offenen Stellung, in welcher der Tauchstutzen an der Membran zur Anlage kommt und die Membran in eine konvex nach unten ausgelenkte Stellung auslenkt.

2. Ventil nach Anspruch 1, worin das untere Ende des Tauchstutzens als Rohrstutzen (16b) ausgebildet ist, durch welchen Flüssigkeit strömt, wenn das Ventil offen ist.

3. Ventil nach Anspruch 2, worin die Außenfläche des Rohrstutzens so gestaltet ist, daß sie in der geöffneten Stellung des Ventils dichtend an den blütenblattförmigen Abschnitten der Membran anliegt.

4. Ventil nach einem beliebigen der vorangehenden Ansprüche, worin die Membran von einer flachen Scheibe aus einem federnden Material gebildet wird, das dadurch in eine konvexe Form gebracht wird, daß ihr Rand zwischen zwei gegenüberliegenden konischen Flächen eines zweiteiligen Montageringes (14, 114) gefangen und eingeklemmt wird, der die Membran umgibt.

## Revendications

1. Robinet comprenant un corps, une membrane (10, 110) montée sur l'extrémité inférieure du corps et formée avec au moins une fente (12, 112) qui est définie par des pétales, et un poussoir (16, 116) agencé à l'intérieur du corps, dans lequel le poussoir et le corps sont axialement mobiles l'un par rapport à l'autre entre une position fermée, dans laquelle le poussoir est distant de la membrane et la membrane adopte une configuration courbée de type convexe ascendante, et une position ouverte dans laquelle le poussoir entre en contact avec la membrane et la dévie selon une configuration de type convexe descendante.

2. Robinet selon la revendication 1, dans lequel l'extrémité inférieure du poussoir est formée comme un tube (16b), à travers lequel du fluide s'écoule lorsque le robinet est ouvert.

3. Robinet selon la revendication 2, dans lequel la surface extérieure du tube est formée pour étancher contre les pétales de la membrane dans la position ouverte de la soupape.

4. Robinet selon l'une quelconque des revendications précédentes, dans lequel la membrane est formée d'un disque plat dans un matériau élastique, qui est rendu convexe par le piégeage et le pressage de son contour entre deux surfaces coniques opposées d'un anneau de montage en deux pièces (14, 114) qui entoure la membrane.
